# EUROPÄISCHE PATENTANMELDUNG

(11) **EP 0 993 097 A2**
(43) Veröffentlichungstag der Anmeldung: **12.04.2000**
(21) Anmeldenummer: 99118059.7
(22) Anmeldetag: 17.09.1999
(51) Int. Cl.: H02K 5/128, H02K 3/47, H02K 3/52

(54) **Spaltrohrmotor**

(30) Priorität: 05.10.1998 DE 19845864
(71) Anmelder: WILO GmbH, D-44263 Dortmund (DE)
(72) Erfinder: Kech, Hansjürgen, 58313 Herdecke (DE); Dreihaus, Uwe, 59067 Hamm (DE); Fabricius, Ingo, 44388 Dortmund (DE)
(74) Vertreter: COHAUSZ HANNIG DAWIDOWICZ & PARTNER

(57) **Zusammenfassung**

Die Erfindung betrifft einen Spaltrohrmotor 15 mit einem Spalttopf 1, der die Wicklungen 20 des Stators trägt, wobei die Wicklungen 20 an der zylindrischen Außenseite des Spalttopfes 1 anliegen und der Spalttopf 1 nach außen gerichtete Elemente 7 aufweist, um die herum oder in die hinein die Wicklungen 20 gewickelt sind.

## Beschreibung

Die Erfindung betrifft einen Spaltrohrmotor mit einem Spalttopf, der die Wicklungen des Stators trägt, wobei die Wicklungen an der zylindrischen Außenseite des Spalttopfes anliegen.

Spaltrohrmotoren sind allgemein bekannt. Bei diesen bekannten Motoren sind die Wicklungen des Stators zumeist auf einem Wicklungsträger angeordnet, der über den Spalttopf geschoben ist. Aus der DE-OS 197 05 974 ist ein solcher Spaltrohrmotor mit einem aufgeschobenen Wicklungsträger bekannt. Der Wicklungsträger stellt dabei ein zusätzliches Bauteil dar, was zusätzliche Kosten bedingt, und er verringert den Wirkungsgrad im kleinen und mittleren Leistungsbereich.

In der DE-OS 44 38 132 wurde vorgeschlagen, daß das Spaltrohr bzw. der Spalttopf die Ständerwicklung trägt, wobei die Wicklung vorzugsweise an der Außenseite des Spalttopfes anliegt.

Das bedeutet jedoch einen erheblichen Arbeitsaufwand bei dem Legen der Wicklungen und birgt die Gefahr, daß sich die Wicklungen unbeabsichtigt verschieben.

Aus der DE 1 222 159 ist ein Spaltrohrmotor bekannt, der entweder mit einem Polstern oder mit einem Ständerblechpaket als Wicklungsträger ausgeführt ist. Dieser Polstern bzw. dieses Ständerblechpaket ist als separates Bauteil außerhalb des Spaltrohres angeordnet, wodurch sich ebenfalls die eingangs genannten Nachteile ergeben.

Aufgabe der Erfindung ist es, einen konstruktiv einfachen, preiswerten und leicht handhabbaren Spaltrohrmotor der eingangs genannten Art zu schaffen, der ohne Wicklungsträger auskommt und schnell und einfach bewickelt werden kann und bei dem die Wicklungen dauerhaft sicheren Halt finden.

Diese Aufgabe wird erfindungsgemäß durch einen Motor nach Anspruch 1 gelöst. Wesentlich ist dabei, daß der Spalttopf nach außen gerichtete Elemente aufweist, um die herum oder in die hinein die Wicklungen gewickelt sind.

Hierdurch wird bei einfacher Konstruktion ein preiswerter Spaltrohrmotor geschaffen, an dem schnell und auf besonders einfache Weise die Wicklungen des Stators angebracht werden können. Die Wicklungen sind durch die Elemente dauerhaft am Spalttopf fixiert, so daß ein nachträgliches Verschieben der Wicklungen vermieden wird. Der Spalttopf wird in der Produktion nicht nur als Wicklungsträger, sondern auch als Montageeinheit benutzt. Auf eine separate Trägereinheit kann dabei verzichtet werden.

Je nach Ausgestaltung der Lager ist der Betrieb des Spalttopfes sowohl für den Naßläufer- als auch für den Trockenläuferbetrieb möglich.

Besonders vorteilhaft ist es, wenn die Elemente radial nach außen gerichtet sind, damit ein besonders einfaches Aufbringen der Wicklungen von außen her möglich ist.

Besonders günstige Aufteilungen der Wicklungen ergeben sich dann, wenn drei bis zwölf, vorzugsweise vier Elemente gleichmäßig über den Umfang des Spalttopfes verteilt sind.

Die Elemente können dabei vorteilhafterweise als Stege oder in Form von Zylindern ausgebildet sein, wobei die Elemente im letzteren Fall vorzugsweise topfförmig mit einer nach außen gerichteten Öffnung ausgebildet sind, so daß die Wicklungen in die Elemente hinein gelegt werden können. Beim direkten Einwickeln der Kupferdrähte in die vorgesehenen topfförmigen Kammern kann z.B. auf Backlackdrähte und ein Verbacken der Wicklung verzichtet werden, wenn die Drähte genügend Halt bzw. Verfestigung durch den Wicklungsprozeß erhalten.

Eine besonders rationelle Fertigung des Spaltrohrmotors kann dadurch erreicht werden, daß die Elemente einstückig mit dem Spalttopf ausgebildet sind, wobei sie insbesondere an den Spalttopf angegossen oder angespritzt sein können.

Besonders günstig ist es dabei ferner, wenn der Spalttopf aus Kunststoff gefertigt ist. Dadurch wird außerdem auch eine Bauform mit besonders geringem Gewicht erreicht.

Der Motor kann vorzugsweise als elektronisch kommutierter Gleichstrommotor oder als Asynchronmotor ausgebildet sein.

Besonders vorteilhaft ist es ferner, wenn an dem Spalttopf ein Kontaktträger angeordnet ist, der die Kontakte zum Anschließen des Motors trägt, beispielsweise Kammern für Mag-Mate Kontakte. Damit entfällt ein zusätzlicher Kammerblock zur Aufnahme des Kontaktierungssystems.

Dabei können die Wicklungen des Stators zumindest teilweise an dem Kontaktträger anliegen. Ein bevorzugter Ort für den Kontaktträger bildet der Boden des Spalttopfes.

Auch hierbei kann eine besonders rationelle Fertigung des Spaltrohrmotors dadurch erreicht werden, daß der Kontaktträger an den Spalttopf angegossen oder angespritzt ist.

Der Spaltrohrmotor kann insbesondere zum Antrieb von Spaltrohr-Kreiselpumpen eingesetzt werden, wobei ein bevorzugtes Anwendungsgebiet darin liegt, daß der Motor mittels der Spaltrohr-Kreiselpumpe die Kühlflüssigkeit im Kühlsystem des Verbrennungsmotors eines Kraftfahrzeuges fördert. Selbstverständlich kann der Motor jedoch auch zum Antrieb anderer Aggregate, beispielsweise zum Antrieb von Lüftern verwendet werden.

Weitere Vorteile und Merkmale der Erfindung ergeben sich aus den Unteransprüchen sowie aus der nachfolgenden Beschreibung und den in den Zeichnungen dargestellten Ausführungsbeispielen.

Es zeigen:
- Figur 1:: Querschnitt durch einen erfindungsgemäßen Spalttopf ohne Wicklungen, und
- Figur 2:: Querschnitt durch einen erfindungsgemäßen Spaltrohrmotor mit Wicklungen an einer Kreiselpumpe

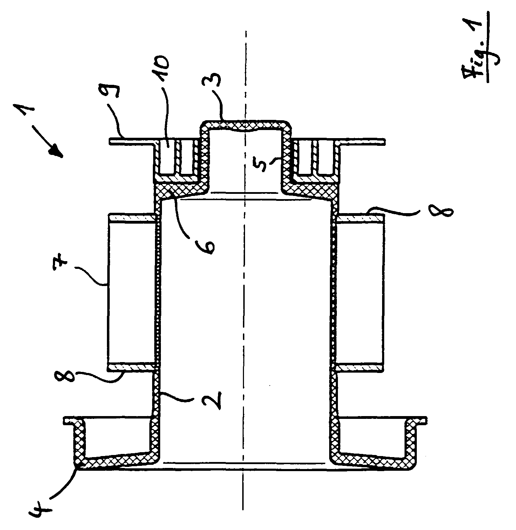

Der in Figur 1 gezeigte Spalttopf 1 weist einen im wesentlichen zylindrischen Topfbereich 2 auf, der an einer Seite durch einen Boden 3 geschlossen ist und an der gegenüberliegenden Seite einen flanschförmig nach außen gerichteten Kragen 4 hat. Der Spalttopf 1 weist an seinem Boden 3 zentral einen vom Kragen 4 weggerichteten Absatz 5 auf, der einen geringeren Durchmesser hat als der zylindrische Topfbereich 2, so daß zwischen dem zylindrischen Topfbereich 2 und dem Absatz 5 eine Stirnwand 6 gebildet ist.

Zwischen der Stirnwand 6 und dem Kragen 4 sind vier zylinderförmige Elemente 7 in 90⁰-Schritten gleichmäßig über den Umfang des zylindrischen Topfbereiches 2 verteilt. Diese Elemente 7 bilden mit ihren Wandungen 8 nach außen hin offene Töpfe, in die die Wicklungen des Stators hineingewickelt werden können. Alternativ ist es auch möglich, die Wicklungen außen um die Elemente 7 herumzuwicklen.

Im dargestellten Ausführungsbeispiel sind die Elemente 7 an den Spalttopf angeklebt. In einer bevorzugten Ausführungsvariante können die Elemente 7 jedoch einstückig an den Spalttopf 1 angegossen sein. Um den Absatz 5 herum ist ein Kontaktträger 9 angeordnet, der Kammern 10 für die Kontakte zum Anschließen des Motors trägt.

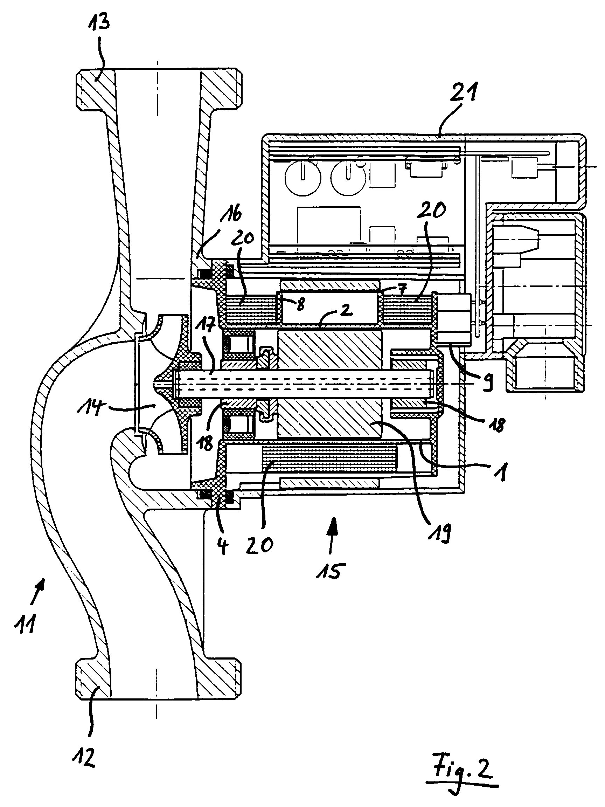

In Figur 2 ist eine Kreiselpumpe 11 mit einem Ansaugstutzen 12, einem Druckstutzen 13 und einem Laufrad 14 dargestellt, die von einem erfindungsgemäßen Spaltrohrmotor 15 angetrieben wird. Der Spalttopf 1 des Spaltrohrmotors 15 ist mit seinem Kragen 4 gegen das Pumpengehäuse 16 abgedichtet. Im Inneren des Spalttopfes 1 ist eine Motorwelle 17 in zwei Lagern 18 gelagert, auf der die Permanentmagnete oder die Wicklungen des Rotors 19 und das Laufrad 14 befestigt sind. Der Rotor 19 ist dabei als Naßläufer ausgeführt.

Figur 2 zeigt zwei verschiedenen Ausführungsvarianten der Elemente 7, wobei in einer konkreten Ausführung des Spaltrohrmotors 15 alle Elemente 7 gleich ausgeführt sind. In der oberen Hälfte des Spaltrohrmotors 15 ist ein zylinderförmiges Element 7 dargestellt, um dessen Wandungen 8 herum die Wicklungen 20 des Stators gewickelt sind. Demgegenüber ist in der unteren Hälfte des Spaltrohrmotors 15 ein stegförmiges Element 7 gezeigt, um das herum die Wicklungen 20 des Stators gewickelt sind. Dabei beanspruchen die Wicklungen in axialer Richtung weniger Platz als bei dem zylinderförmigen Element 7 in der oberen Bildhälfte.

Am Boden 3 des Spalttopfes 1 befindet sich ein Kontaktträger 9, über den der Spaltrohrmotor 15 an die in dem Gehäuse 21 untergebrachte Elektronik angeschlossen ist.

## Patentansprüche

1. Spaltrohrmotor mit einem Spalttopf, der die Wicklungen des Stators trägt, wobei die Wicklungen an der zylindrischen Außenseite des Spalttopfes anliegen,
**dadurch gekennzeichnet,**
daß der Spalttopf (1) nach außen gerichtete Elemente (7) aufweist, um die herum oder in die hinein die Wicklungen (20) gewickelt sind.

2. Spaltrohrmotor nach Anspruch 1, **dadurch gekennzeichnet**, daß die Elemente (7) radial nach außen gerichtet sind.

3. Spaltrohrmotor nach Anspruch 1 oder 2, **dadurch gekennzeichnet**, daß drei bis zwölf, vorzugsweise vier Elemente (7) gleichmäßig über den Umfang des Spalttopfes (1) verteilt sind.

4. Spaltrohrmotor nach einem der vorherigen Ansprüche, **dadurch gekennzeichnet**,daß die Elemente (7) als Stege ausgebildet sind.

5. Spaltrohrmotor nach einem der Ansprüche 1 bis 3, **dadurch gekennzeichnet**, daß die Elemente (7) zylinderförmig ausgebildet sind.

6. Spaltrohrmotor nach einem der vorherigen Ansprüche und insbesondere nach Anspruch 5, **dadurch gekennzeichnet,** daß die Elemente (7) topfförmig mit einer nach außen gerichteten Öffnung ausgebildet sind, derart, daß die Wicklungen (20) in die Elemente (7) hinein gelegt sind.

7. Spaltrohrmotor nach einem der vorherigen Ansprüche, **dadurch gekennzeichnet**,daß die Elemente (7) einstückig mit dem Spalttopf (1) ausgebildet sind.

8. Spaltrohrmotor nach Anspruch 7, **dadurch gekennzeichnet**, daß die Elemente (7) an den Spalttopf (1) angegossen oder angespritzt sind.

9. Spaltrohrmotor nach einem der vorherigen Ansprüche, **dadurch gekennzeichnet**, daß der Spalttopf (1) aus Kunststoff gefertigt ist.

10. Spaltrohrmotor nach einem der vorherigen Ansprüche, **dadurch gekennzeichnet**, daß der Motor (15) ein elektronisch kommutierter Gleichstrommotor ist.

11. Spaltrohrmotor nach einem der Ansprüche 1 bis 9, **dadurch gekennzeichnet**,daß der Motor (15) ein Asynchronmotor ist.

12. Spaltrohrmotor nach einem der vorherigen Ansprüche, **dadurch gekennzeichnet**,daß an dem Spalttopf (1) ein Kontaktträger (9) angeordnet ist, der die Kontakte zum Anschließen des Motors (15) trägt.

13. Spaltrohrmotor nach Anspruch 12, **dadurch gekennzeichnet,** daß die Wicklungen (20) des Stators zumindest teilweise an dem Kontaktträger (9) anliegen.

14. Spaltrohrmotor nach Anspruch 12 oder 13, **dadurch gekennzeichnet**, daß der Kontaktträger (9) am Boden (3) des Spalttopfes (1) angeordnet ist.

15. Spaltrohrmotor nach einem der Ansprüche 12 bis 14, **dadurch gekennzeichnet**,daß der Kontaktträger (9) an den Spalttopf (1) angegossen oder angespritzt ist.

16. Spaltrohrmotor nach einem der vorherigen Ansprüche, **dadurch gekennzeichnet**, daß der Motor (15) eine Spaltrohr-Kreiselpumpe (11) antreibt.

17. Spaltrohrmotor nach Anspruch 14, **dadurch gekennzeichnet**, daß der Motor (15) mittels der Spaltrohr-Kreiselpumpe (11) die Kühlflüssigkeit im Kühlsystem des Verbrennungsmotors eines Kraftfahrzeuges fördert.

18. Spaltrohrmotor nach einem der vorherigen Ansprüche, **dadurch gekennzeichnet**, daß der Motor (15) einen Lüfter antreibt.
